# EUROPEAN PATENT SPECIFICATION

(11) **EP 2 769 762 B1**
(45) Date of publication and mention of the grant of the patent: **28.03.2018**
(21) Application number: 14154879.2
(22) Date of filing: 12.02.2014
(51) Int. Cl.: B01F 3/02, B01F 5/02, B01F 5/04, B01F 5/06, F01N 3/20, F01N 13/00, F01N 3/28

(54) **Dispersion plate and dispersion apparatus**
Dispersonsplatte und Dispersionsvorrichtung
Plaque de dispersion et appareil de dispersion

(30) Priority: 21.02.2013 JP 2013032285
(43) Date of publication of application: 27.08.2014
(73) Proprietor: TOYOTA JIDOSHA KABUSHIKI KAISHA, Toyota-shi, Aichi-ken, 471-8571 (JP)
(72) Inventor: Tsuchiya, Tomihisa, Toyota-shi, Aichi-ken, 471-8571 (JP)
(74) Representative: Kuhnen & Wacker Patent- und Rechtsanwaltsbüro PartG mbB

(56) References cited:
- EP-A1- 1 514 592
- EP-A1- 2 535 535
- DE-A1-102008 017 395
- US-A1- 2008 060 712

## Description

### BACKGROUND OF THE INVENTION

### 1. Field of the Invention

This invention relates to a dispersion plate for dispersing a reducing agent injected to an exhaust path, and a dispersion apparatus including the dispersion plate.

### 2. Description of Related Art

Japanese Patent Application Publication No. JP 2008-274941 A describes an apparatus for dispersing a catalytic reducing agent injected to an exhaust path, by a dispersion plate provided in the exhaust path. The dispersion plate of the apparatus is provided along a circumferential direction of a cylindrical body, and includes a plurality of blades of which tips extend from an outer circumference of the cylindrical body to a center thereof. Further, the dispersion plate includes a passage opening formed in the center of the cylindrical body so as to be surrounded by the tips of the plurality of blades. From EP 2 535 535 A1, a static mixer having an annular body provided with a blade row with multiple guide vanes projected inwardly from the annular body is known. Said document discloses a dispersion plate according to the preamble of claim 1. The annular body has two partial bodies in circumferential direction. The partial bodies are fixed to each other in the circumferential direction. Each partial body has multiple guide vanes. The partial bodies are engaged with each other and compressed with each other in area of its circumferential ends. DE 10 2008 017 395 A1 finally discloses a mixture or evaporation device having a tubing body where radially inward projecting blades in circumferential direction are arranged at the axial ends of the tubing body. The blades are engaged in axial direction and the tubing body with the blades is made up of sheet metal body.

### SUMMARY OF THE INVENTION

In the meantime, such a dispersion plate may have a problem that the reducing agent thus injected passes through the passage opening and flows to a downstream without making contact with the blades. When the reducing agent flows as such, the reducing agent makes direct contact with a catalyst without being dispersed by the dispersion plate. In a case where the plurality of blades is further extended to close the passage opening in order to avoid this problem, pressure loss in the dispersion plate is increased.

The present invention provides a dispersion plate according to claim 1 and a dispersion apparatus according to claim 2 each of which is able to improve dispersibility of a reducing agent while restraining an increase of pressure loss.

A dispersion plate according to a first aspect of the present invention as set forth in claim 1 is characterized by including: a cylindrical body; a plurality of blades provided along a circumferential direction of the cylindrical body, the plurality of blades being extended from an outer circumference of the cylindrical body to a center of the cylindrical body, so as to form a passage opening surrounded by tips of the plurality of blades, the passage opening being provided in the center of the cylindrical body; and a plurality of shielding plates provided so as to be distanced from the plurality of blades in an axial direction of the cylindrical body, the shielding plate covering the passage opening and tips of the shielding plates extend toward respective positions different from each other in the axial direction of the cylindrical body.

According to the dispersion plate of the first aspect of the present invention, since the passage opening is covered with the shielding plates, a reducing agent to pass through the passage opening is allowed to strike the shielding plates, thereby making it possible to increase dispersibility of the reducing agent. Further, the passage opening is covered with the shielding plates provided so as to be distanced from the plurality of blades in the axial direction of the cylindrical body. This allows exhaust gas to flow through a space between the shielding plates and the plurality of blades. Accordingly, it is possible to restrain an increase of pressure loss, differently from a configuration in which a plurality of blades extends to a center of a cylindrical body so as not to form a passage opening.

According to the above configuration, since the passage opening is covered with the plurality of shielding plates, it is possible to reduce respective heat capacities of the shielding plates, thereby making it possible to appropriately increase temperatures of the shielding plates by heat of the exhaust gas. Accordingly, it is possible to promote, due to heat of the shielding plates, vaporization of the reducing agent that strikes the shielding plates. Further, since the tips of the shielding plates are provided at respective positions different from each other in the axial direction of the cylindrical body, it is possible to restrain an increase of pressure loss along with the provision of the plurality of shielding plates.

A dispersion apparatus according to a second aspect of the present invention is characterized by including: the dispersion plate according to the first aspect; and an addition valve for injecting a reducing agent in an exhaust path, the addition valve being provided in an upstream of the exhaust path with respect to the dispersion plate.

According to the dispersion apparatus of the second aspect of the present invention, it is possible to disperse the reducing agent by the plurality of blades after the reducing agent to pass through the passage opening is caused to strike the shielding plates. This makes it possible to increase dispersibility of the reducing agent. Further, the passage opening is covered with the shielding plates provided so as to be offset with respect to the plurality of blades, thereby making it possible to restrain an increase of pressure loss.

In the dispersion apparatus according to the second aspect of the present invention, the shielding plates may be disposed in the exhaust path so as to be placed closer to the upstream in the exhaust path than the plurality of blades. Further, in the dispersion apparatus according to the second aspect of the present invention, the shielding plates may extend to a position where a jet from an injection hole of the addition valve directly strikes the shielding plate. Further, in the dispersion apparatus according to the second aspect of the present invention, the addition valve may have a plurality of injection holes, the number of the plurality of injection holes is equal to the number of the shielding plates; and the shielding plates may extend to respective positions where jets from the plurality of injection holes directly strike the shielding plates.

According to the above configuration, jets of the reducing agent injected from the addition valve are caused to strike the shielding plates, thereby making it possible to promote vaporization and dispersion of the reducing agent.

Further, in the dispersion apparatus according to the second aspect of the present invention, the shielding plates may include an inclined plane inclined toward a downstream in the exhaust path.

According to the above configuration, the reducing agent that strikes the shielding plate is easy to flow to the downstream of the shielding plate along the inclined plane. Accordingly, it is possible to flow the reducing agent to the downstream before droplets of the reducing agent attached to the shielding plates grow. As a result, it is possible to restrain a sudden temperature decrease of a catalyst caused when the grown droplets of the reducing agent are added to the catalyst, and a decrease of a function of the catalyst due to the sudden temperature decrease.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view illustrating a dispersion apparatus and its peripheral structure;
FIG. 2 is a sectional view illustrating an exhaust path and a dispersion plate;
FIG. 3 is a partial sectional view illustrating the exhaust path and the dispersion plate;
FIG. 4 is a perspective view of the dispersion plate; and
FIG. 5 illustrates a modified embodiment of a shielding plate.

### DETAILED DESCRIPTION OF EMBODIMENTS

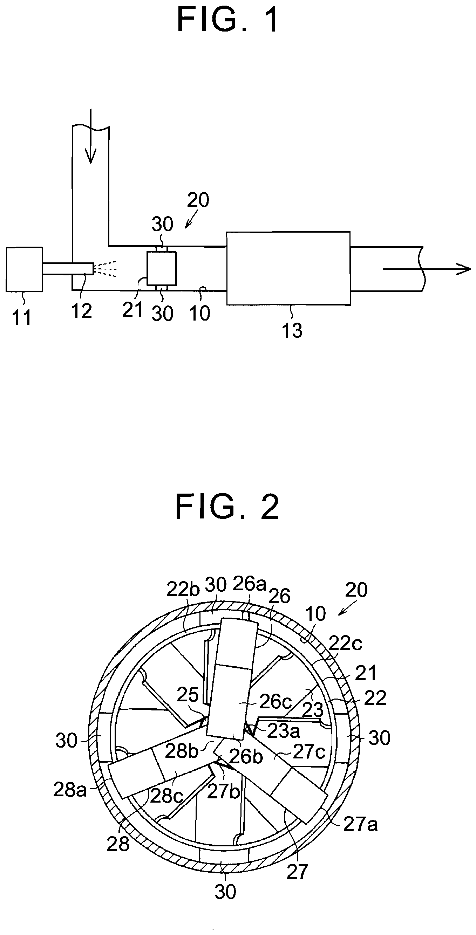

The following describes one embodiment of a dispersion plate and a dispersion apparatus. As illustrated in FIG. 1, an exhaust path 10 is provided with a SCR (Selective Catalytic Reduction) catalyst 13 as a nitrogen oxide purification catalyst for reducing NOx (nitrogen oxides) exhausted from an internal combustion engine. A urea aqueous solution (so-called "urea water") as a reducing agent is injected from an addition valve 12 and added to an upstream of an exhaust flow to the SCR catalyst 13 (hereinafter just referred to as "upstream") in the exhaust path 10. When the urea water thus added is hydrolyzed in an exhaust gas, ammonia is generated. Then, a reducing action by ammonia occurs in the SCR catalyst 13 placed in a downstream of an exhaust flow from the addition valve 12 in the exhaust path 10, so that NOx included in the exhaust gas is reduced to nitrogen and water. The urea water is supplied to the addition valve 12 from a tank 11 for retaining the urea water. In the exhaust path 10, a dispersion apparatus 20 for dispersing the urea water injected from the addition valve 12, into the exhaust gas by means of a dispersion plate 21 is provided between the SCR catalyst 13 and the addition valve 12.

As illustrated in FIGS. 2 to 4, the dispersion plate 21 of the dispersion apparatus 20 includes; a cylindrical body 22 extending in an exhaust flow direction in the exhaust path 10; and a plurality of blades 23 which is provided along a circumferential direction of the cylindrical body 22 and of which tips 23a are extended from an outer circumference of the cylindrical body 22 toward a center thereof. The plurality of blades 23 is bent from an end portion 22a of the cylindrical body 22 in an axial direction of the cylindrical body 22 (hereinafter referred to as "axial direction S") toward the center of the cylindrical body 22, and is inclined by a predetermined angle, where a virtual line extending in a radial direction of the cylindrical body 22 is taken as a rotation axis.

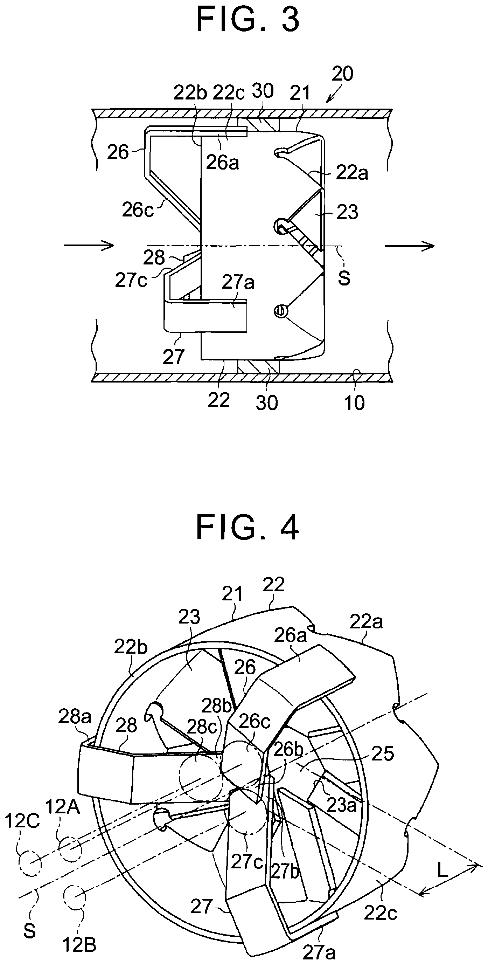

In the center of the cylindrical body 22, a passage opening 25 is formed by being surrounded by the tips 23a of the plurality of blades 23. Further, three shielding plates 26, 27, 28 are provided such that tips 26b, 27b, 28b cover the passage opening 25 in the axial direction S. The shielding plates 26, 27, 28 have a rectangular shape, and end portions 26a, 27a, 28a thereof are fixed to an outer peripheral surface 22c of the cylindrical body 22. The end portions 26a, 27a, 28a of the shielding plates 26, 27, 28 are bent at that end portion 22b of the cylindrical body 22 which is an opposite end to the end portion 22a provided with the plurality of blades 23. The tips 26b, 27b, 28b of the shielding plates 26, 27, 28 thus bent extend toward the center of the cylindrical body 22. Further, the tips 26b, 27b, 28b of the shielding plates 26, 27, 28 are bent toward the end portion 22a of the cylindrical body 22 as such, so that the shielding plates 26, 27, 28 have inclined planes 26c, 27c, 28c that are inclined toward the end portion 22a. The tips 26b, 27b, 28b of the shielding plates 26, 27, 28 extend toward respective positions different from each other in the axial direction S. Further, as illustrated in FIG. 4, the shielding plates 26, 27, 28 are provided so as to be distanced by a distance L from the plurality of blades 23 in the axial direction S.

The dispersion plate 21 is disposed in the exhaust path 10 so that the shielding plates 26, 27, 28 are placed closer to the upstream of the exhaust path 10 than the plurality of blades 23. Hereby, the inclined planes 26c, 27c, 28c of the shielding plates 26, 27, 28 are inclined toward the downstream of the exhaust path 10. The dispersion plate 21 is fixed to the exhaust path 10 by a retainer 30 provided between the outer peripheral surface 22c of the cylindrical body 22 and an inner peripheral surface of the exhaust path 10.

As illustrated in FIG. 4, the addition valve 12 has three injection holes 12A, 12B, 12C for injecting urea water. That is, the shielding plates 26, 27, 28 are provided so that the number thereof accords with the number of injection holes 12A, 12B, 12C of the addition valve 12. The shielding plates 26, 27, 28 extend toward respective positions at which respective jets of urea water injected from the injection holes 12A, 12B, 12C of the addition valve 12 directly strike the shielding plates 26, 27, 28. Note that since the passage opening 25 is covered with three shielding plates 26, 27, 28, those parts of the tips 26b, 27b, 28b of the shielding plates 26, 27, 28 which cover the passage opening 25 are small in comparison with a case where the passage opening 25 is covered with only one shielding plate. Because of this, the parts of tips 26b, 27b, 28b of the shielding plates 26, 27, 28 have relatively small heat capacities, so that their temperatures are easily increased by heat of the exhaust gas.

The following describes an effect of the dispersion apparatus 20. In the urea water injected from the injection holes 12A, 12B, 12C of the addition valve 12 toward the dispersion plate 21, the urea water that directly strikes the plurality of blades 23 is changed in its flow direction by the plurality of blades 23, so as to dispersedly flow to a downstream of the dispersion plate 21.

On the other hand, in the urea water injected from the addition valve 12, the urea water that directly strikes the shielding plates 26, 27, 28 is promoted to be vaporized by heat of the shielding plates 26, 27, 28 that are heated by heat of the exhaust gas. Besides such vaporization, the urea water that directly strikes the shielding plates 26, 27, 28 is also dispersed in a fog-like manner or attached to surfaces of the shielding plates 26, 27, 28 in a liquid state. The urea water thus attached to the shielding plates 26, 27, 28 is easy to flow to a downstream of the shielding plates 26, 27, 28 due to the inclined planes 26c, 27c, 28c of the shielding plates 26, 27, 28. Accordingly, it is possible to flow the urea water to the downstream along the inclined planes 26c, 27c, 28c before droplets of the urea water thus attached to the shielding plates 26, 27, 28 grow. The urea water thus flowing to the downstream of the shielding plates 26, 27, 28 is dispersed by the plurality of blades 23. The urea water thus dispersed by the dispersion plate 21 flows to the downstream of the dispersion plate 21, and then supplied to the SCR catalyst 13.

According to the dispersion plate 21 and the dispersion apparatus 20, the following effects can be yielded. (1) By covering the passage opening 25 with the shielding plates 26, 27, 28, the urea water to pass through the passage opening 25 is allowed to strike the shielding plates 26, 27, 28, thereby making it possible to increase dispersibility of the urea water. Further, differently from a configuration in which the plurality of blades 23 extends to the center of the cylindrical body 22 so as not to form the passage opening 25, the shielding plates 26, 27, 28 are provided so as to be distanced by the distance L from the plurality of blades 23 and to cover the passage opening 25. This allows the exhaust gas to flow through a space between the shielding plates 26, 27, 28 and the plurality of blades 23, thereby making it possible to restrain an increase of pressure loss.
(2) Since a plurality of shielding plates 26, 27, 28 are provided, it is possible to reduce respective heat capacities of the shielding plates 26, 27, 28, thereby making it possible to appropriately increase temperatures of the shielding plates 26, 27, 28 by heat of the exhaust gas. Accordingly, it is possible to promote, by heat of the shielding plates 26, 27, 28, vaporization of the urea water that strikes the shielding plates 26, 27, 28. Further, since the tips 26b, 27b, 28b of the shielding plates 26, 27, 28 are provided at respective positions different from each other in the axial direction S, it is also possible to restrain pressure loss along with the provision of the plurality of shielding plates 26, 27, 28.
(3) The dispersion plate 21 is disposed in the exhaust path 10 so that the shielding plates 26, 27, 28 are placed closer to the upstream of the exhaust path 10 than the plurality of blades 23. Hereby, after the urea water to pass through the passage opening 25 is caused to strike the shielding plates 26, 27, 28, it is possible to disperse the urea water by the plurality of blades 23. This makes it possible to increase the dispersibility of the urea water.
(4) The shielding plates 26, 27, 28, are provided so that the number thereof accords with the number of injection holes 12A, 12B, 12C of the addition valve 12, and to extend toward respective positions at which respective jets of urea water injected from the injection holes 12A, 12B, 12C of the addition valve 12 directly strike the shielding plates 26, 27, 28. This makes it possible to promote vaporization and dispersion of the urea water.
(5) Since the shielding plates 26, 27, 28 are provided with the inclined planes 26c, 27c, 28c, it is possible to restrain a sudden temperature decrease of the SCR catalyst 13 caused when a large quantity of urea water flows at a time in a liquid state to the downstream of the dispersion plate 21, and a decrease of a catalytic function due to the sudden temperature decrease.

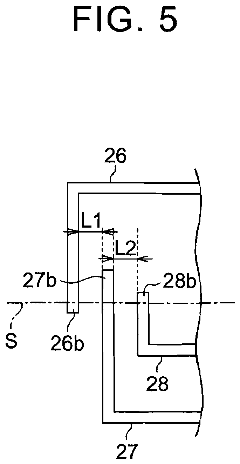

Note that the abovementioned embodiment is performable by modification as follows. As illustrated in FIG. 5, the shielding plates 26, 27, 28 may be configured such that the inclined planes 26c, 27c, 28c are not formed, and their tips 26b, 27b, 28b extend in a direction perpendicular to the axial direction S. Even with such a configuration, it is possible to yield the same effects as the effects (1) to (4) obtained in the above embodiment. Further, even in such a configuration, similarly to the above embodiment, distances L1 and L2 are set between the tips 26b, 27b, 28b so as not to increase pressure loss of the exhaust gas flowing in vicinity to the tips 26b, 27b, 28b of the shielding plates 26, 27, 28.

The number of shielding plates 26, 27, 28 may be not more than two, or not less than four. The passage opening 25 may be covered with one shielding plate. Note that, in this case, it is desirable that that part of the shielding plate which overlaps with the passage opening 25 be formed so as to have an area large enough to cover the passage opening 25 in the axial direction S. Even in such a configuration, it is possible to yield the same effects as the effects (1) and (3) to (5) obtained in the above embodiment.

Even in a case where the number of shielding plates is set to a number other than three, the number of shielding plates may be set to the same as the number of injection holes of the addition valve 12. Further, in the above embodiment and the modified embodiments, the number of shielding plates may be different from the number of injection holes of the addition valve 12. Note that in the case where the number of shielding plates 26, 27, 28 is different from the number of injection holes of the addition valve 12, it is desirable to provide the shielding plates so that respective jets of urea water injected from respective injection holes directly strike any of the shielding plates. Further, the shielding plates may be provided so that all of the jets of urea water injected from the injection holes directly strike some of the shielding plates.

The jets of urea water injected from the injection holes of the addition valve 12 may be configured so as not to directly strike the shielding plates. Even in such a configuration, by covering the passage opening 25 with the shielding plates, the urea water to pass through the passage opening 25 is allowed to strike the shielding plates.

The dispersion plate 21 may be disposed in the exhaust path 10 so that the plurality of blades 23 is placed at an upstream side of the exhaust path 10 and the shielding plates 26, 27, 28 are placed at a downstream side of the exhaust path 10. Even in such a configuration, it is possible to yield the same effects as the effects (1), (2), (4), and (5) obtained in the above embodiment.

The urea water is supplied by the addition valve 12, but other reducing agents (e.g., an ammonium solution, fuel, or and the like) may be supplied.

## Claims

1. A dispersion plate (21) comprising:
a cylindrical body (22);
a plurality of blades (23) provided along a circumferential direction of the cylindrical body (22), the plurality of blades (23) being extended from an outer circumference of the cylindrical body (22) to a center of the cylindrical body (22), so as to form a passage opening (25) surrounded by tips (23a) of the plurality of blades (23), the passage opening (25) being provided in the center of the cylindrical body (22);
a plurality of shielding plates (26, 27, 28) provided so as to be distanced from the plurality of blades (23) in an axial direction of the cylindrical body (22), the shielding plates (26, 27, 28) covering the passage opening (25), **characterized in that** tips (26b, 27b, 28b) of the plurality of shielding plates (26, 27, 28) extend toward respective positions different from each other in the axial direction of the cylindrical body (22).

2. A dispersion apparatus **characterized by** comprising:
the dispersion plate (21) according to claim 1; and
an addition valve (12) for injecting a reducing agent in an exhaust path, the addition valve (12) being provided in an upstream of the exhaust path with respect to the dispersion plate (21).

3. The dispersion apparatus according to claim 2, wherein
the shielding plates (26, 27, 28) are disposed in the exhaust path so as to be placed closer to the upstream in the exhaust path than the plurality of blades (23).

4. The dispersion apparatus according to claim 3, wherein
the shielding plates (26, 27, 28) are configured to extend to a position where a jet from an injection hole of the addition valve (12) directly strikes the shielding plate (26, 27, 28).

5. The dispersion apparatus according to claim 4, wherein:
the addition valve (12) has a plurality of injection holes, the number of the plurality of injection holes is equal to the number of the shielding plates (26, 27, 28);
the shielding plates (26, 27, 28) extend to respective positions where jets from the plurality of injection holes directly strike the shielding plates (26, 27, 28).

6. The dispersion apparatus according to any one of claims 3 to 4, wherein
the shielding plates (26, 27, 28) include an inclined plane inclined toward a downstream in the exhaust path.

## Patentansprüche

1. Dispersionsplatte (21), aufweisend:
einen zylindrischen Körper (22);
eine Mehrzahl an Schaufeln (23), die sich entlang einer Umfangsrichtung des zylindrischen Körpers (22) befinden, wobei die Mehrzahl an Schaufeln (23) von einem äußeren Umfang des zylindrischen Körpers (22) hin zu einer Mitte des zylindrischen Körpers (22) verläuft, um eine Leitungsöffnung (25) zu bilden, die von Spitzen (23a) von der Mehrzahl an Schaufeln (23) umgeben ist, wobei sich die Leitungsöffnung (25) in der Mitte des zylindrischen Körpers (22) befindet;
eine Mehrzahl an Abschirmplatten (26, 27, 28), die so vorgesehen sind, dass sie von der Mehrzahl an Schaufeln (23) in einer axialen Richtung des zylindrischen Körpers (22) beabstandet sind, wobei die Abschirmplatten (26, 27, 28) die Leitungsöffnung (25) abdecken, **dadurch gekennzeichnet, dass** Spitzen (26b, 27b, 28b) der Mehrzahl an Abschirmplatten (26, 27, 28) in Richtung entsprechender Positionen verlaufen, die sich voneinander in der axialen Richtung des zylindrischen Körpers (22) unterscheiden.

2. Dispersionsvorrichtung, **dadurch gekennzeichnet, dass** sie aufweist:
die Dispersionsplatte (21) nach Anspruch 1; und
ein Beigabeventil (12) zum Einspritzen eines Reduktionsmittels in einen Abgastrakt, wobei sich das Beigabeventil (12) im Hinblick auf die Dispersionsplatte (21) stromaufwärts von dem Abgastrakt befindet.

3. Dispersionsvorrichtung nach Anspruch 2, wobei
sich die Abschirmplatten (26, 27, 28) so in dem Abgastrakt befinden, dass sie weiter stromaufwärts in dem Abgastrakt platziert sind als die Mehrzahl an Schaufeln (23).

4. Dispersionsvorrichtung nach Anspruch 3, wobei
die Abschirmplatten (26, 27, 28) so konfiguriert sind, dass sie zu einer Position verlaufen, an der ein Strahl aus einem Einspritzloch des Beigabeventils (12) direkt die Abschirmplatte (26, 27, 28) trifft.

5. Dispersionsvorrichtung nach Anspruch 4, wobei
das Beigabeventil (12) eine Mehrzahl an Einspritzlöchern aufweist, wobei die Anzahl der Mehrzahl an Einspritzlöchern gleich der Anzahl der Abschirmplatten (26, 27, 28) ist;
die Abschirmplatten (26, 27, 28) zu entsprechenden Positionen verlaufen, wo Strahlen aus der Mehrzahl an Einspritzlöchern direkt die Abschirmplatten (26, 27, 28) treffen.

6. Dispersionsvorrichtung nach einem der Ansprüche 3 bis 4, wobei
die Abschirmplatten (26, 27, 28) eine geneigte Ebene beinhalten, die in eine Stromabwärtsrichtung in dem Abgastrakt geneigt ist.

## Revendications

1. Plaque de dispersion (21) comprenant :
un corps cylindrique (22) ;
une pluralité de pales (23) placées le long d'une direction circonférentielle du corps cylindrique (22), la pluralité de pales (23) étant étendues depuis une circonférence extérieure du corps cylindrique (22) vers un centre du corps cylindrique (22), de façon à former une ouverture de passage (25) entourée par des extrémités (23a) de la pluralité de pales (23), l'ouverture de passage (25) étant placée dans le centre du corps cylindrique (22) ;
une pluralité de plaques de protection (26, 27, 28) placées de façon à être à distance de la pluralité de pales (23) dans une direction axiale du corps cylindrique (22), les plaques de protection (26, 27, 28) couvrant l'ouverture de passage (25), **caractérisée en ce que** des extrémités (26b, 27b, 28b) de la pluralité de plaques de protection (26, 27, 28) s'étendent vers des positions respectives différentes les unes des autres dans la direction axiale du corps cylindrique (22).

2. Dispositif de dispersion **caractérisé en ce qu'**il comprend ;
la plaque de dispersion (21) selon la revendication 1 ; et
une soupape d'addition (12) pour injecter un agent réducteur dans un passage d'échappement, la soupape d'addition (12) étant placée dans un amont du passage d'échappement par rapport à la plaque de dispersion (21).

3. Dispositif de dispersion selon la revendication 2, dans lequel
les plaques de protection (26, 27, 28) sont disposées dans le passage d'échappement de façon à être placées plus proches de l'amont dans le passage d'échappement que la pluralité de pales (23).

4. Dispositif de dispersion selon la revendication 3, dans lequel
les plaques de protection (26, 27, 28) sont configurées pour s'étendre vers une position où un jet venant d'un trou d'injection de la soupape d'addition (12) frappe directement la plaque de protection (26, 27, 28).

5. Dispositif de dispersion selon la revendication 4, dans lequel
la soupape d'addition (12) comporte une pluralité de trous d'injection, le nombre de la pluralité de trous d'injection est égal au nombre des plaques de protection (26, 27, 28) ;
les plaques de protection (26, 27, 28) s'étendent vers des positions respectives où des jets venant de la pluralité de trous d'injection frappent directement les plaques de protection (26, 27, 28).

6. Dispositif de dispersion selon l'une quelconque des revendications 3 à 4, dans lequel
les plaques de protection (26, 27, 28) incluent un plan incliné vers un aval dans le passage d'échappement.
